# EUROPÄISCHE PATENTSCHRIFT

(11) **EP 3 204 811 B1**
(45) Veröffentlichungstag und Bekanntmachung des Hinweises auf die Patenterteilung: **23.02.2022**
(21) Anmeldenummer: 15780801.5
(22) Anmeldetag: 01.10.2015
(51) Int. Cl.: G02B 21/02, G02B 21/08, G02B 21/12

(54) **MIKROSKOP**
MICROSCOPE
MICROSCOPE

(30) Priorität: 06.10.2014 DE 102014114469
(43) Veröffentlichungstag der Anmeldung: 16.08.2017
(73) Patentinhaber: Leica Microsystems (Schweiz) AG, 9435 Heerbrugg (CH)
(72) Erfinder: SCHNITZLER, Harald, CH-9450 Lüchingen (CH); PAULUS, Robert, 88145 Hergatz (DE)
(74) Vertreter: Schaumburg und Partner Patentanwälte mbB
(86) Internationale Anmeldenummer: PCT/EP2015/072660
(87) Internationale Veröffentlichungsnummer: WO 2016/055337

(56) Entgegenhaltungen:
- EP-A2- 2 026 115
- WO-A1-03/034124
- WO-A2-03/009042
- US-A1- 2012 050 851
- US-A1- 2012 062 987
- US-B1- 6 219 189

## Beschreibung

Die Erfindung betrifft ein Mikroskop zum Detektieren von Bildern eines in einer Objektebene liegenden Objekts.

Aus dem Stand der Technik ist ein System mit Objektiven und in dem Mikroskopkörper integrierter Koaxialbeleuchtung bekannt. Dabei sind Kontrastieradapter im Mikroskopkörper lokalisiert. Das bekannte System umfasst ein Zoom-Mikroskop, in dem die koaxiale Beleuchtungseinspeisung zwischen Objektiv und Zoomkörper lokalisiert ist. Dabei können die Objektive getauscht werden.

Ferner ist aus dem Stand der Technik eine Auflichtachse für Compound-Mikroskope bekannt, die zwischen dem Objektiv bzw. dem Objektivrevolver und einem Beobachtungstubus positioniert ist.

Ferner ist aus dem Stand der Technik eine modulare, koaxiale Beleuchtung für ein Mikroskop, die zwischen Objektiv und Zoom positioniert ist, bekannt. Insbesondere wird dieses bekannte Koaxialmodul als Hellfeld-Koaxialbeleuchtung in Stereomikroskopen eingesetzt.

Die bekannten Systeme zur Mikroskopbeleuchtung haben jedoch den Nachteil, dass ein separates Beleuchtungsmodul oberhalb des Objektivs zwischen Zoom und Objektiv positioniert ist. Ferner ist zur Durchführung einer Polarisationsmikroskopie und der Unterdrückung eines störenden Helligkeitshintergrunds im Bild eine Lambda/4-Platte als separates Bauteil unterhalb des Objektivs angebracht. Durch diese Positionierung des separaten Beleuchtungsmoduls bzw. der Lambda/4-Platte als separates Bauteil wird mehr Platz im Beobachtungsstrahlengang des Mikroskops benötigt. Somit sind die bekannten Systeme hinsichtlich ihrer Bauhöhe nicht optimiert. Ferner ist der Aufbau der bekannten Systeme mit dem separaten Beleuchtungsmodul bzw. mit der Lambda/4-Platte als separatem Bauteil relativ kompliziert. Ferner sind die Komponenten des separaten Beleuchtungsmoduls nicht spezifisch für verschiedene Objektive. Dadurch ist die Bildqualität des Gesamtsystems verringert, da das Beleuchtungsmodul für alle einsetzbaren Objektive ausgelegt sein muss. Ein weiterer Nachteil der bekannten Systeme ist, dass der freie Arbeitsabstand (d.h. der Freiraum zwischen Objektiv und Objektebene), der zur Manipulation des Objekts genutzt werden kann, nicht optimiert ist.

Dokument EP 2 026 115 A2 offenbart ein optisches System zur Beleuchtung und Beobachtung eines in einer Objektebene angeordneten Objektes. Das optische System umfasst ein Objektiv und eine Beleuchtungseinrichtung. Das Objektiv umfasst einen Haltezylinder, in dem bildseitig eine erste Linsengruppe, objektseitig eine zweite Linsengruppe und zwischen der ersten und der zweiten Linsengruppe ein halbdurchlässiger Spiegel, der gegenüber der optischen Achse des Objektivs verkippt ist, angeordnet sind. Die Beleuchtungseinrichtung umfasst eine Lichtquelle, einen Lichtwellenleiter und eine Beleuchtungsoptik, die eine Kondensorlinse, eine Aperturblende, eine Feldblende und eine Relaislinse umfasst. Von der Lichtquelle erzeugtes Beleuchtungslicht wird über den Lichtwellenleiter in die Beleuchtungsoptik transportiert. Nach Durchtritt durch die Beleuchtungsoptik fällt das Beleuchtungslicht seitlich in das Objektiv und wird durch den halbdurchlässigen Spiegel in Richtung der Objektebene abgelenkt.

Dokument WO 03/00942 A2 offenbart ein Mikroskopobjektiv, das einen Strahlteiler zum Auskoppeln von Beobachtungslicht aufweist.

Dokument WO 03/034124 A1 offenbart ein Mikroskopobjektiv mit einem integrierten Strahlteiler zum Einkoppeln von Laserlicht zur Manipulation einer Probe.

Dokument US 6,219,189 B1 offenbart ein Mikroskopobjektiv mit einer ersten Linsengruppe und einer zweiten Linsengruppe, zwischen denen ein dichroitischer Spiegel zum Einkoppeln von Anregungslicht angeordnet ist.

Dokument US 2012/0062987 A1 offenbart ein Mikroskopobjektiv mit einem abnehmbaren Filterarm. Der Filterarm umfasst eine Beleuchtungseinrichtung und einen Strahlteiler zum Einkoppeln des Beleuchtungslichtes in den Strahlengang des Mikroskopobjektivs.

Dokument US 2012/0050851 A1 offenbart ein Mikroskop mit einem Revolverkopf für wenigstens ein Objektiv und einen Lichtrevolver mit einem Strahlteiler zum Einkoppeln von durch eine Lichtquelle erzeugtem Beleuchtungslicht.

Ausgehend von dem bekannten Stand der Technik ist es Aufgabe der Erfindung, ein Mikroskopobjektiv zum Detektieren von Bildern eines in einer Objektebene liegenden Objekts anzugeben, das durch einen einfachen Aufbau und eine hohe Bildqualität gekennzeichnet ist.

Diese Aufgabe wird durch ein Mikroskopobjektiv mit den Merkmalen des Anspruchs 1 gelöst.

Vorteilhafte Weiterbildungen sind in den abhängigen Ansprüchen angegeben.

Durch ein Mikroskopobjektiv mit den Merkmalen des Anspruchs 1 wird die geringe Bauhöhe, der maximierte freie Arbeitsabstand, der einfache Aufbau und die hohe Bildqualität erreicht, da insbesondere ein in das Mikroskopobjektiv integrierter Strahlteiler zum Einkoppeln einer koaxialen Auflichtbeleuchtung vorgesehen ist.

Ferner wird ein Mikroskop mit dem erfindungsgemäßen Mikroskopobjektiv vorgeschlagen.

Dabei ist der in das Mikroskopobjektiv integrierte Strahlteiler in einem Beobachtungsstrahlengang zwischen der Objektebene und der Bildebene und in einem Beleuchtungsstrahlengang zwischen der Lichtquelle und der Objektebene derart angeordnet, dass das von der Lichtquelle erzeugte Licht auf das in der Objektebene liegende Objekt ablenkbar ist. Vorzugsweise sind der Beobachtungsstrahlengang und der Beleuchtungsstrahlengang zumindest teilweise koaxial. Somit kann eine Koaxialbeleuchtung für das Mikroskop realisiert werden. Ferner wird durch die Anordnung des in das Mikroskopobjektiv integrierten Strahlteilers in dem Beobachtungs- bzw. Beleuchtungsstrahlengang die geringe Bauhöhe, der optimierte freie Arbeitsabstand, der einfache Aufbau und die hohe Bildqualität des Mikroskops erreicht.

Dabei kann die Bildebene die Zwischenbildebene eines visuellen, d.h. eines klassischen mit Tubus versehenen Mikroskops, oder die Aufnahmeebene einer Bilderfassungseinheit, wie z.B. ein Bildsensor, eines Digitalmikroskops sein. Die koaxiale Auflichtbeleuchtung entspricht einer Beleuchtung des Objekts mit seitlich eingekoppeltem Licht von oben. Dabei ist die Lichtquelle zur Beleuchtung oberhalb der Objektebene angeordnet. Ferner sind dabei der Beobachtungsstrahlengang und der Beleuchtungsstrahlengang zumindest teilweise koaxial.

Es ist vorteilhaft, wenn der Strahlteiler derart ausgebildet ist, dass das von der Lichtquelle erzeugte Licht in den Beobachtungsstrahlengang eingekoppelt wird. Vorzugsweise ist der Strahlteiler relativ zur Lichtquelle derart angeordnet, dass das von der Lichtquelle erzeugte Licht seitlich in den Beobachtungsstrahlengang eingekoppelt wird und das seitlich in den Beobachtungsstrahlengang eingekoppelte Licht auf das in der Objektebene liegende Objekt abgelenkt wird. Somit kann die seitliche Einkopplung des von der Lichtquelle erzeugten Lichts für die Koaxialbeleuchtung des Mikroskops realisiert werden.

Vorzugsweise ist in dem Beleuchtungsstrahlengang zwischen der Lichtquelle und der Objektebene in einem dem Mikroskopobjektiv zugewandten Teil des Mikroskopstativs eine Leuchtfeldblende und eine Aperturblende derart angeordnet, dass eine Köhlersche Bedingung für die Beleuchtung des Objekts erfüllt ist. Dadurch kann die Köhlersche Beleuchtung des in der Objektebene liegenden Objekts erreicht werden.

Alternativ dazu wird die Lichtquelle in eine Feldebene und durch das Mikroskopobjektiv in die Objektebene abgebildet, so dass eine kritische Beleuchtung des Objekts erzielt wird. Dadurch kann anstelle der Köhlerschen Beleuchtung auch eine kritische Beleuchtung des in der Objektebene liegenden Objekts erreicht werden.

Nach einer besonders bevorzugten Ausführungsform ist es vorteilhaft, wenn eine Lambda/4-Platte zwischen mehreren dem Strahlteiler in Beleuchtungsrichtung nachgeordneten Objektivlinsen angeordnet ist, und wenn die Linsenflächen derjenigen Objektivlinsen, die der Lambda/4-Platte in Beleuchtungsrichtung nachgeordnet sind, derart ausgebildet sind, dass an denselben reflektiertes Licht im Wesentlichen aus dem Beobachtungsstrahlengang herausgelenkt wird. Dadurch können Objektivlinsen mit einer hohen Brechkraft an dem der Objektebene zugewandten Ende des Mikroskopobjektivs angeordnet werden.

Insbesondere ist die Lambda/4-Platte in dem Teil des Objektivs lokalisiert, der vom Beleuchtungs- wie auch vom Beobachtungsstrahlengang gleichermaßen genutzt wird.

Das Mikroskop ist durch ein in das Mikroskopobjektiv integriertes refraktives Element gekennzeichnet, wobei ein der Objektebene zugewandter Teil des Mikroskopobjektivs in dem Beobachtungsstrahlengang zwischen der Objektebene und der Bildebene und in dem Beleuchtungsstrahlengang zwischen der Objektebene und der Bildebene und in dem Beleuchtungsstrahlengang zwischen der Lichtquelle und der Objektebene angeordnet ist, wobei das in das Mikroskopobjektiv integrierte refraktive Element dem Strahlteiler in Beleuchtungsrichtung vorgeordnet und in dem Beleuchtungsstrahlengang zwischen der Lichtquelle und der Objektebene in einem der Lichtquelle zugewandten Teil des Mikroskopobjektivs derart angeordnet ist, dass die Beleuchtungsaperatur der Objektivapertur des Mikroskopobjektivs entspricht. Dadurch kann die Beleuchtungsapertur individuell angepasst werden, ohne dass eine komplizierte Anordnung für die Koaxialbeleuchtung benötigt wird. Ebenso ist durch ein individuell an das Mikroskopobjektiv anpassbares refraktives Element eine Optimierung der Homogenität der Beleuchtung im Objektfeld möglich.

Vorzugsweise ist im Mikroskopobjektiv ein Kontrastierelement angeordnet. Dadurch kann z.B. eine schiefe Beleuchtung des in der Objektebene liegenden Objekts erreicht werden.

Ferner ist es vorteilhaft, wenn das Mikroskop durch eine in das Mikroskopobjektiv integrierte Schnittstelle zum Einschieben verschiedener Kontrastierelemente gekennzeichnet ist. Dadurch können die Kontrastierelemente an das jeweilige Mikroskopobjektiv flexibel angepasst, oder verschiedenartig gestaltete Kontrastierelemente in den Beleuchtungsstrahlengang eingebracht werden.

Das Mikroskopobjektiv ist ein abnehmbares Mikroskopobjektiv, das an dem Mikroskopstativ montierbar bzw. abmontierbar ist.

Gemäß weiteren Ausführungsbeispielen wird ein Mikroskopsystem bereitgestellt. Das Mikroskopsystem umfasst ein beispielhaftes Mikroskop, ein beispielhaftes, einen Strahlteiler umfassendes Mikroskopobjektiv und wenigstens ein strahlteilerfreies weiteres, abnehmbares Mikroskopobjektiv. Dabei ist der Arbeitsabstand und/oder die Brennweite bei Montage des strahlteilerfreien Objektivs größer als bei Montage des den Strahlteiler umfassenden Objektivs.

Die vorliegende Erfindung überwindet insbesondere die folgenden Nachteile der bekannten Systeme zur Mikroskopbeleuchtung. Für gering vergrößernde Objektive ist eine koaxiale Beleuchtung in den überwiegenden Fällen nicht notwendig. Bei den bekannten Systemen ist der Strahlteiler für die Koaxialbeleuchtung jedoch fest mit dem Zoomsystem verbunden, wodurch eine Optimierung des Gesamtsystems für gering vergrößernde Objektive verhindert wird. Es wurde erkannt, dass insbesondere bei gering vergrößernden Objektiven davon profitiert werden kann, dass die Linsen im Bauraum untergebracht werden, der normalerweise vom Strahlteiler für die Koaxialbeleuchtung belegt ist. Die Tatsache, dass für diese gering brechenden Objektive, d.h. Objektive mit größerer Brennweite, der Aufwand zur Aberrationskorrektur wegen der geringeren Anzahl an Linsen sinkt, ermöglicht eine Vergrößerung des Arbeitsabstands eines derartigen Objektivs. Zusätzlich dazu bewirkt ein fest integrierter Strahlteiler für diese gering vergrößernden Objektive bei den bekannten Systemen, der durch ein Teilungsverhältnis von z.B. 50/50 gekennzeichnet ist, dauerhaft eine geringere Helligkeit am Detektor. Dabei bewirkt die notwendige Erhöhung der Helligkeit der Lichtquelle eine höhere Temperatur am Ort der Lichtquelle sowie eine höhere Beleuchtungsstärke am Ort der Probe.

Die vorliegende Erfindung ermöglicht hingegen die Optimierung zugunsten des Arbeitsabstands, indem der Strahlteiler im Objektiv integriert wird. Dadurch ist die Realisierung des maximal möglichen Arbeitsabstands möglich. Durch die Verfügbarkeit einer Beleuchtungsoption mit eigener Lichtquelle kann mit der vorliegenden Erfindung die Helligkeit der Lichtquelle unabhängig von einer eventuell gleichzeitig genutzten zweiten Beleuchtung, wie z.B. einem Ringlicht, gesteuert werden. Dies ist bei den bekannten Systemen nicht möglich, da hier eine Lichtquelle für beide Beleuchtungsarten, d.h. die Ringlicht- und Koaxialbeleuchtung, genutzt wird. Zusätzlich verhindert die vorliegende Erfindung eine nicht optimale Bedienung des Mikroskops, da anstelle der Koaxialbeleuchtung für gering vergrößernde Objektive eine andere Beleuchtung vorgesehen sein kann.

In den Auflichtachsen der bekannten Systeme kann der Strahlteilerwürfel ausgeschwenkt werden. Dies verhindert zwar eine höhere Beleuchtungsstärke. Es ergeben sich jedoch wiederum die gerade genannten Nachteile bezüglich des Arbeitsabstands. Ferner ermöglichen diese bekannten Systeme zwar eine Kontrastierung bzw. schiefe Beleuchtung. Diese bekannten Systeme sind jedoch relativ kompliziert, da die fest mit der Beleuchtungsachse verbundene Kontrasteinheit in seiner Eigenschaft alle für den Einsatz in einem Mikroskop vorgesehenen Objektive abdecken muss.

Die vorliegende Erfindung ermöglicht hingegen die feste konstruktive Integration des Kontrastierelements in das Objektiv. Die beispielhafte Umsetzung hat gegenüber dem Stand der Technik den Vorteil, dass das Kontrastierelement an die spezifischen Bedingungen des Objektivs angepasst werden kann, was zu einer Leistungssteigerung der Kontrastierung führt. Demgegenüber ist bei den bekannten Systemen mit der modularen, koaxialen Beleuchtung typischerweise keine Kontrastierung möglich.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert. Es zeigen:
- Fig. 1: eine schematische Darstellung eines beispielhaften Mikroskops zum Detektieren von Bildern eines in einer Objektebene liegenden Objekts mit einem Bildsensor; und
- Fig. 2: eine schematische Darstellung des beispielhaften Mikroskops nach Figur 1 mit Abbildungsstrahlengängen zur Veranschaulichung einer kritischen Beleuchtung des Objekts.

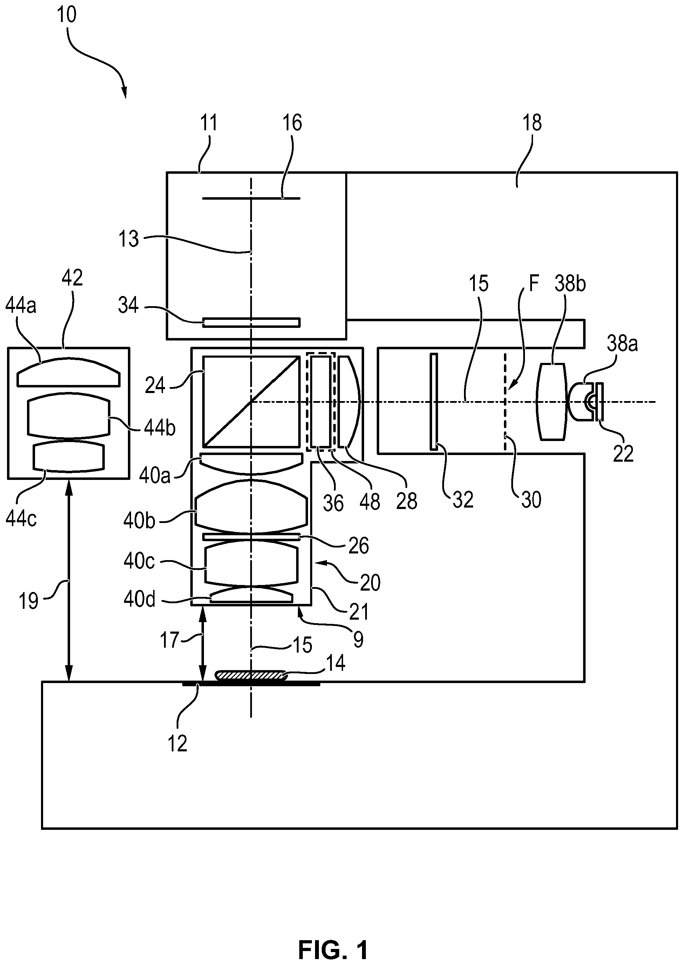

Figur 1 zeigt eine schematische Darstellung eines beispielhaften Mikroskops 10 zum Detektieren von Bildern eines in einer Objektebene 12 liegenden Objekts 14 mit einem Bildsensor 16. Das Element 16 kann auch als Zwischenbildebene und damit als Schnittstelle für einen visuellen Einblick in einem Mikroskop angenommen werden.

Wie in Figur 1 gezeigt, umfasst das Mikroskop 10 ein Mikroskopstativ 18 und ein Mikroskopobjektiv 20. Dabei stellen das Mikroskopstativ 18 und das Mikroskopobjektiv 20 zwei voneinander getrennte Komponenten des Mikroskops 10 dar. Ferner umfasst das in Figur 1 gezeigte Mikroskop 10 eine in das Mikroskopstativ 18 integrierte Lichtquelle 22. Wie in Figur 1 gezeigt, ist der Bildsensor 16 Bestandteil eines Detektors 11, der an dem Mikroskopstativ 18 angebracht ist. Alternativ kann auch ein Tubus in einem visuellen System vorgesehen sein. Der Bildsensor 16 dient zur Detektion von zweidimensionalen Bildern des in der Objektebene 12 liegenden Objekts 14.

Ferner sind in Figur 1 der Beobachtungsstrahlengang zwischen der Objektebene 12 und dem Bildsensor 16 mit der Achse 13 sowie der Beleuchtungsstrahlengang zwischen der Lichtquelle 22 und der Objektebene 12 mit der zur Achse 13 zumindest teilweise koaxialen Achse 15 gezeigt. Der Beobachtungsstrahlengang und der Beleuchtungsstrahlengang sind zumindest teilweise koaxial. Dabei liegt der koaxiale Beobachtungs- bzw. Beleuchtungsstrahlengang senkrecht zur Objektebene 12. Die Beleuchtungsrichtung ist definiert als die Richtung des von der Lichtquelle 22 erzeugten Lichts, das sich entlang dem Beleuchtungsstrahlengang 15 in Richtung der Objektebene 12 ausbreitet.

Wie in Figur 1 gezeigt, umfasst das Mikroskopobjektiv 20 einen der Lichtquelle 22 zugewandten Teil und einen der Objektebene 12 zugewandten Teil. Ferner umfasst das Mikroskopobjektiv 20 einen integrierten Strahlteiler 24. Ferner umfasst das Mikroskopobjektiv 20 ein integriertes refraktives Element 28, das dem Strahlteiler 24 in Beleuchtungsrichtung vorgeordnet und in dem der Lichtquelle 22 zugewandten Teil des Mikroskopobjektivs 20 angeordnet ist. Zwischen dem refraktiven Element 28 und dem Strahlteiler 24 ist ein Kontrastierelement 36 angeordnet. Ferner umfasst das Mikroskopobjektiv 20 eine integrierte Lambda/4-Platte 26, die dem Strahlteiler 24 in Beleuchtungsrichtung nachgeordnet und in dem der Objektebene 12 zugewandten Teil des Mikroskopobjektivs 20 angeordnet ist. Die Lambda/4-Platte 26 ist zwischen mehreren dem Strahlteiler 24 in Beleuchtungsrichtung nachgeordneten Objektivlinsen 40a bis 40d angeordnet. Dabei sind die Objektivlinsen 40a, 40b der Lambda/4-Platte 26 in Beleuchtungsrichtung vorgeordnet, während die Objektivlinsen 40c, 40d der Lambda/4-Platte 26 in Beleuchtungsrichtung nachgeordnet sind. Der Arbeitsabstand 17 entspricht dem Abstand zwischen der der Objektebene 12 zugewandten Stirnseite 9 des Mikroskopobjektivs 20 und der Objektebene 12.

Das Mikroskopstativ 18 umfasst einen dem Mikroskopobjektiv 20 zugewandten Teil. Dieser dem Mikroskopobjektiv 20 zugewandte Teil des Mikroskopstativs 18 umfasst optische Elemente 38a, 38b, die der Lichtquelle 22 in Beleuchtungsrichtung nachgeordnet sind, und eine Leuchtfeldblende 30, die den optischen Elementen 38a, 38b in Beleuchtungsrichtung nachgeordnet ist. Ferner umfasst der dem Mikroskopobjektiv 20 zugewandte Teil des Mikroskopstativs 18 einen Polarisator 32, der der Leuchtfeldblende 30 in Beleuchtungsrichtung nachgeordnet ist. Ferner ist in dem Beobachtungsstrahlengang 13 zwischen der Objektebene 12 und dem Bildsensor 16 lichtstromabwärts des Strahlteilers 24 ein Analysator 34 angeordnet. Dabei ist der Analysator 34 Bestandteil des an dem Mikroskopstativ 18 angebrachten Detektors 11.

Die in Figur 1 gezeigte Position des Polarisators 32 ist beispielhaft im Stativ 18 gezeichnet. Der Polarisator kann ebenso im Objektiv integriert sein. Ferner kann auch der Analysator anstelle in der Detektoreinheit im Stativ integriert sein.

Zusätzlich zu dem Mikroskopobjektiv 20 umfasst das Mikroskop 10 ein strahlteilerfreies, weiteres Mikroskopobjektiv 42 mit mehreren Objektivlinsen 44a bis 44c. Insbesondere umfasst das in Figur 1 gezeigte Mikroskopsystem das den Strahlteiler 24 umfassende Mikroskopobjektiv 20 und das strahlteilerfreie, weitere Mikroskopobjektiv 42. Dabei sind die Mikroskopobjektive 20, 42 jeweils abnehmbare Mikroskopobjektive. Ferner ist der Arbeitsabstand 19 und/oder die Brennweite bei Montage des strahlteilerfreien Objektivs 42 größer als bei Montage des den Strahlteiler 24 umfassenden Objektivs 20.

Für den Fall, dass das weitere Mikroskopobjektiv 42 in dem Beobachtungsstrahlengang 13 zwischen der Objektebene 12 und dem Bildsensor 16 angeordnet ist, ist in dem Mikroskop 10 alternativ oder zusätzlich zu einer Auflichtbeleuchtung eine Durchlichtbeleuchtung, Schräglichtbeleuchtung oder Ringlichtbeleuchtung vorgesehen. Diese alternative oder zusätzliche Beleuchtung ist in Figur 1 nicht dargestellt. Die Auflichtbeleuchtung wird durch Einbringen des Mikroskopobjektivs 20 in den Beobachtungsstrahlengang 13 zwischen der Objektebene 12 und dem Bildsensor 16 gemäß der in Figur 1 dargestellten Weise realisiert.

Bei der in Figur 1 gezeigten Anordnung sind die Lichtquelle 22 eine Leuchtdiode (LED), die optischen Elemente 38a, 38b spezielle Linsen für den Beleuchtungsstrahlengang, das refraktive Element 28 eine plankonvexe Linse und die Objektivlinsen 40a bis 40d und 44a bis 44c jeweils ein Objektivlinsensystem des Mikroskopobjektivs 20 bzw. 42 bildende Linsen.

Der in das Mikroskopobjektiv 20 integrierte Strahlteiler 24 dient zur seitlichen Einkopplung des von der Lichtquelle 22 erzeugten Lichts in den Beobachtungsstrahlengang 13. Ferner wird das seitlich in den

Beobachtungsstrahlengang 13 eingekoppelte Licht unter Verwendung des Strahlteilers 24 auf das in der Objektebene 12 liegende Objekt 14 abgelenkt. Dadurch, dass der Strahlteiler 24 zur Einkopplung des Koaxiallichts in den Beobachtungsstrahlengang 13 in das Mikroskopobjektiv 20 integriert ist, wird eine Optimierung des Gesamtsystems zugunsten des Arbeitsabstands ermöglicht. Das als Koaxiallicht bezeichnete Licht ist das in den Beobachtungsstrahlengang eingekoppelte Licht, das auf das in der Objektebene 12 liegende Objekt 14 abgelenkt wird. Objektive, die keinen Koax-Strahlteiler wie das in Figur 1 gezeigte weitere Mikroskopobjektiv 42 benötigen, können mit größerem Arbeitsabstand und/oder größerer Brennweite, d.h., stärkerer Variation des Vergrößerungsfaktors, realisiert werden. Dadurch kann der begrenzte Bauraum für diese Objektive vorteilhaft genutzt werden. Insbesondere kann ein Objektiv, das wie das Mikroskopobjektiv 42 keinen Strahlteiler benötigt, gewichtsoptimiert und mit geringerem Volumen realisiert werden. Dies ist für den Benutzer u.a. dahingehend vorteilhaft, dass bei der Verwendung eines derartigen Mikroskopsystems auf einem Kippstativ die Probe, wie z.B. eine Leiterplatte mit hohen Bauteilen, ein deutlich größeres Volumen einnehmen kann, ohne dass die Probe mit dem Objektiv bei einer Kippung kollidiert.

Die der Lichtquelle 22 in Beleuchtungsrichtung nachgeordnete Leuchtfeldblende 30 dient zur Bereitstellung einer Köhlerschen Beleuchtung des in der Objektebene 12 liegenden Objekts 14. Dabei ist die Leuchtfeldblende 30 derart angeordnet, dass die sogenannte Köhlersche Bedingung für die Beleuchtung des Objekts 14 erfüllt ist. Um verschiedene Mikroskopobjektive mit Licht zur Ausleuchtung des Objektfeldes zu versorgen, sollte der Koaxialstrahlengang, d.h., der zumindest teilweise koaxiale Beobachtungs- bzw. Beleuchtungsstrahlengang, die aus dem Köhlerschen Beleuchtungsprinzip ableitbaren Bedingungen der Pupillen- und Lukenabbildung erfüllen. Sollte eine strenge Zuordnung von Pupillen und Feld gegeben sein, so sorgt die Ausdehnung des Leuchtflecks in der Feldebene F für die Ausleuchtung des Feldes bis zum Feldrand. Die maximale Ausdehnung des Leuchtflecks in der Aperturblendenebene bestimmt den maximalen Beleuchtungswinkel im Objekt. Dieser Beleuchtungswinkel sollte so gewählt werden, dass der am Objekt reflektierte Strahl durch den Beobachtungspfad bis zum Detektor (Auge oder Kamera) transmittiert wird.

Ebenso kann im Koaxialstrahlengang die sogenannte kritische Beleuchtung umgesetzt sein. Dabei wird die Lichtquelle 22 in eine Feldebene F und mit dem Mikroskopobjektiv 20 bzw. 42 in die Nähe der auch als Präparatebene bezeichneten Objektebene 12 abgebildet. Wenn die Struktur des von der Lichtquelle 22 ausgehenden Lichts zerstört werden soll, kann dies, spezifisch für jedes Mikroskopobjektiv individuell durch Mattierung optischer Flächen im auch als Beleuchtungsteil bezeichneten, der Lichtquelle 22 zugewandten Teil des Mikroskopobjektivs 20 geschehen.

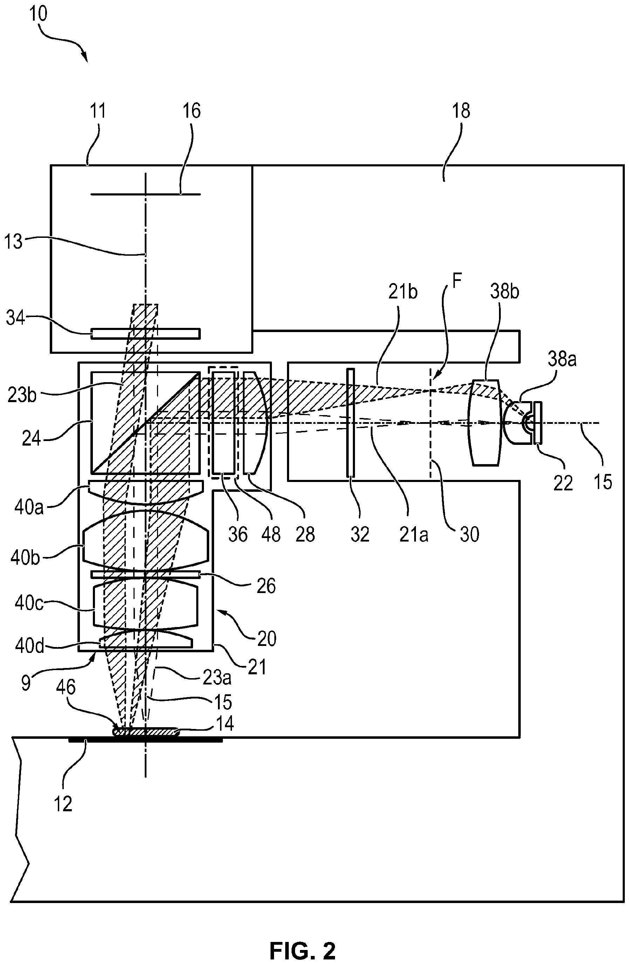

Figur 2 zeigt eine schematische Darstellung des beispielhaften Mikroskops 10 nach Figur 1 mit Abbildungsstrahlengängen 21a, 21b zur Veranschaulichung einer kritischen Beleuchtung des Objekts. In Figur 2 ist das in der Objektebene 12 liegende Objekt nicht dargestellt. Die in Figur 2 gezeigten Abbildungsstrahlengänge 21a, 21b beziehen sich auf Zentralstrahlen bzw. Randstrahlen des von der Lichtquelle 22 ausgehenden Lichts.

Zur Abbildung der Lichtquelle 22 in die Feldebene F sowie auf die Objektebene 12 werden die der Lichtquelle 22 in Beleuchtungsrichtung nachgeordneten optischen Elemente 38a, 38b verwendet. Nach der Reflexion an dem in der Objektebene 12 liegenden Objekt 14 ergeben sich die entsprechenden Strahlengänge 23a, 23b für die in Richtung des Detektors 11 reflektierten Reflexionsstrahlen. Insbesondere sind in Figur 2 die Abbildungsstrahlengänge 21a, 21b nur schematisch dargestellt. Ferner sind die Reflexionsstrahlengänge nicht vollständig bis zum Bildsensor 16 des Detektors 11 gezeichnet.

Die in das Mikroskopobjektiv 20 integrierte Lambda/4-Platte 26 dient zur Beeinflussung der Polarisationsrichtung des die Lambda/4-Platte 26 durchlaufenden Lichts. Ferner sind der Polarisator 32 und der Analysator 34 als gekreuzte Polarisatoren ausgebildet. D.h., die Durchlassrichtung des Analysators 34 ist bezüglich der durch den Polarisator 32 erzeugten Polarisationsrichtung um 90° gedreht. Der Polarisator 32, die Lambda/4-Platte 26 und der Analysator 34 bewirken eine verbesserte Hellfeldpolarisations-Mikroskopie. Die verbesserte Hellfeldpolarisations-Mikroskopie wird insbesondere durch das Anbringen und geeignete Ausrichten der Lambda/4-Platte 26 erreicht. Ferner kann durch ein Entfernen oder Drehen der Lambda/4-Platte 26 auch eine Dunkelfeldpolarisations-Mikroskopie realisiert werden. Dabei ist die Lambda/4-Platte 26 im Vergleich zu der Stellung bei der Hellfeldpolarisations-Mikroskopie um 45° verdreht.

Zur Realisierung der verbesserten Hellfeldpolarisations-Mikroskopie sind der Polarisator 32, die Lambda/4-Platte 26 und der Analysator 34 derart konfiguriert, dass die Polarisationsrichtung des Lichts, das an dem in der Objektebene 12 liegenden Objekt 14 reflektiert wird, die Lambda/4-Platte 26 in Richtung des Bildsensors 16 durchquert und auf den Analysator 34 auftrifft, der Durchlassrichtung des Analysators 34 entspricht. Dabei wird die durch den Polarisator 32 eingestellte Polarisationsrichtung des von der Lichtquelle 22 erzeugten Lichts, das die Lambda/4-Platte 26 in Richtung der Objektebene 12 durchquert, nach der Reflexion an dem in der Objektebene 12 liegenden Objekt 14 beim wiederholten Durchqueren der Lambda/4-Platte 26 in Richtung des Bildsensors 16 mit Hilfe der Lambda/4-Platte 26 um 90° gedreht. Dagegen wird die durch den Polarisator 32 bewirkte Polarisationsrichtung des von der Lichtquelle 22 erzeugten Lichts, das an Linsenflächen der der Lambda/4-Platte 26 in Beleuchtungsrichtung vorgeordneten Objektivlinsen 40a, 40b reflektiert wird und nach der Reflexion auf den Analysator 34 auftrifft, nicht gedreht. Ferner sind die Linsenflächen der der Lambda/4-Platte 26 in Beleuchtungsrichtung nachgeordneten Objektivlinsen 40c, 40d so stark gekrümmt, dass an denselben reflektiertes Licht aus dem Beobachtungsstrahlengang herausgelenkt wird. Somit wird nur das an dem in der Objektebene 12 liegenden Objekt 14 reflektierte Licht, das die Lambda/4-Platte 26 zweimal durchquert, d.h., in Beleuchtungsrichtung und in einer der Beleuchtungsrichtung entgegengesetzten Richtung, von dem Analysators 34 durchgelassen, so dass dieses Licht von dem Bildsensor 16 detektiert wird. Das an den Linsenflächen der Objektivlinsen 40a bis 40d reflektierte Licht gelangt jedoch nicht zum Bildsensor 16 des Detektors 11.

Insbesondere sind bei der in Figur 1 gezeigten Anordnung der Lambda/4-Platte 26 zwischen den mehreren Objektivlinsen 40a bis 40d die der Lambda/4-Platte 26 in Beleuchtungsrichtung nachgeordneten Objektivlinsen 40c, 40d Objektivlinsen mit einer hohen Brechkraft. Dies hat für das Optik-Design den Vorteil, dass die Brechkraft der Objektivlinsen am unteren Ende des Mikroskopobjektivs 20 platziert werden kann und somit der Arbeitsabstand 17 vergrößert wird. Diese Ausführungsform ist insbesondere bei Objektiven hoher Brechkraft und damit starken Krümmungsradien der unteren Linsen vorteilhaft.

Alternativ zu der in Figur 1 gezeigten Anordnung ist die Lambda/4-Platte 26 vorzugsweise an dem der Objektebene 12 zugewandten Ende des Mikroskopobjektivs 20 angeordnet. D.h., in diesem Fall ist die Lambda/4-Platte 26 allen Objektivlinsen 40a bis 40d in Beleuchtungsrichtung nachgeordnet. Dadurch wird verhindert, dass Reflexionen an Linsenflächen von allen diesen Objektivlinsen 40a bis 40d zu dem Bildsensor 16 des Detektors 11 gelangen.

Bei der beispielhaften Koaxialbeleuchtung wird vermieden, dass Beleuchtungslicht, das an Linsenflächen von im Beobachtungsstrahlengang angeordneten Objektivlinsen reflektiert wird, einen störenden Helligkeitsuntergrund im erhaltenen Bild verursacht. Dies wird durch das Einbringen der gekreuzten Polarisatoren, d.h. des Polarisators 32 und des Analysators 34, verhindert. Dabei wird der im Beleuchtungsstrahlengang angeordnete Polarisator 32 gekreuzt zum im Beobachtungsstrahlengang angeordneten Analysator 34 ausgerichtet. Somit kann kein Beleuchtungslicht den Bildsensor 16 erreichen, solange der Polarisationszustand des Lichts nicht gedreht wird.

Gemäß eines bevorzugten Ausführungsbeispiels der Erfindung werden insbesondere zwei mikroskopische Verfahren ermöglicht. Diese sind die Dunkelfeldpolarisations-Mikroskopie sowie die Hellfeldpolarisations-Mikroskopie.

Bei der bevorzugten Ausführungsform der Dunkelfeldpolarisations-Mikroskopie sind die zwei Polarisatoren 32, 34 derart konfiguriert, dass alles Licht gesperrt wird, wenn dessen Polarisation nicht gestört wird. Die Polarisationsstörung erfolgt in diesem Anwendungsfall nur durch Störstellen auf einem ansonsten spiegelnden Präparat, so dass der Beobachter ein überwiegend dunkles Bild mit hellen Störstellen erhält.

Bei der bevorzugten Ausführungsform der Hellfeldpolarisations-Mikroskopie sind der Polarisator 32, die Lambda/4-Platte 26 und der Analysator 34 derart konfiguriert, dass das Licht die Lambda/4-Platte 26 zweimal, d.h., hin und zurück, passiert, wodurch die Polarisationsrichtung des zurücklaufenden Lichts um 90° gedreht wird. Der Beobachter erhält dann ein überwiegend helles Bild, weil das Beleuchtungslicht, welches vom Objekt 14 zurückgespiegelt wird, in die Durchlassrichtung des Analysators 34 gedreht wird.

Durch die Bereitstellung der Lambda/4-Platte 26 als integrierter Bestandteil des Mikroskopobjektivs 20 ergeben sich die folgenden Vorteile. Der freie Arbeitsabstand zwischen Objektiv und Objekt kann vergrößert werden. Die optische Abbildungsqualität kann erhöht werden, da keine Lambda/4-Platte unter dem Objektiv eingebracht werden muss, die unvermeidbare sphärische und chromatische Aberrationen erzeugt. Auch Objektive mit hohen Vergrößerungen bzw. hohen Auflösungen können mit der integrierten Lambda/4-Platte versehen werden. Bei der Ausführungsform, bei der die Lambda/4-Platte nicht als unterstes Element, sondern zwischen den Linsenelementen des Objektivs angeordnet ist, können zwar prinzipiell Reflexionen der darunter folgenden Linsenflächen wiederum zur Beobachtung gelangen, diese Ausführungsform hat aber den Vorteil, dass die Platzierung der Brechkraft der Linsen am unteren Ende des Objektivs ermöglicht wird.

Vorzugsweise ist die Lambda/4-Platte 26 drehbar gelagert. Damit kann das Verhältnis an polarisationserhaltend reflektiertem und nicht-polarisationserhaltend remittiertem Licht im Bild gesteuert werden. Dies erlaubt das Umschalten zwischen den oben beschriebenen Hell- und Dunkelfeldszenarien.

Die Lambda/4-Platte ist typischerweise rotierbar. Somit kann ihre Wirkung auf die Polarisation willkürlich eingestellt werden. Insbesondere stehen der Polarisator bzw. das Polarisationsfilter im Beleuchtungsstrahlengang und der Analysator im Beobachtungsstrahlengang werksseitig voreingestellt und fix 90° zueinander. Zusätzlich kann die Lambda/4-Platte an besagtem Ort eingebracht werden, die es je nach rotierbarer Einstellung erlaubt, das Licht, welches vom Objekt zurückreflektiert wird, in die Durchlassrichtung des Analysators zu drehen. Dreht man die Lambda/4-Platte um 45° zu dieser Wirkstellung, dann bewirkt sie effektiv nichts, d.h., das Licht wird durch den Analysator gesperrt (als wäre keine Lambda/4-Platte eingebracht).

Das in das Mikroskopobjektiv 20 integrierte refraktive Element 28 dient zur Anpassung der Beleuchtungsapertur an die Objektivapertur des Mikroskopobjektivs 20. Dabei wird das refraktive Element 28 so ausgewählt, dass die Beleuchtungsapertur für die Koaxialbeleuchtung der Objektivapertur des jeweiligen in dem Beobachtungsstrahlengang angeordneten Mikroskopobjektivs 20 entspricht. Somit wird keine komplizierte Beleuchtungsanordnung für die Koaxialbeleuchtung verschiedener Objektive mit jeweils unterschiedlicher Objektivapertur benötigt. Dadurch, dass die Beleuchtungsapertur jeweils der Objektivapertur des Mikroskopobjektivs 20 entspricht, wird eine Verringerung des Auflösungsvermögens des jeweiligen Mikroskopobjektivs 20 verhindert. Dabei ist es vorteilhaft, dass ein Teil der Optik des Beleuchtungsarms, d.h., das in dem der Lichtquelle 22 zugewandten Teil des Mikroskopobjektivs 20 angeordnete refraktive Element 28, integrierter Bestandteil des jeweiligen Mikroskopobjektivs 20 ist. Dadurch wird dieser Teil mit dem Objektiv gewechselt und erlaubt eine individuelle Anpassung der Beleuchtungsstrahlen für jedes Objektiv.

Ferner wird es mit einer individuell für jedes Objektiv definierten Brechkraft mit Hilfe des integrierten refraktiven Elements 28 ermöglicht, eine spezifische Anpassung des Koaxialstrahlengangs dahingehend durchzuführen, dass z.B. die Homogenität in der Objektebene 12 verbessert wird.

Durch das Einbringen des Kontrastierelements 36 in den Beleuchtungsstrahlengang zwischen dem refraktiven Element 28 und dem Strahlteiler 24 kann eine schiefe Beleuchtung realisiert werden. Dabei kann die Geometrie des Kontrastierelements 36 beispielsweise eine sichelförmige oder eine runde Geometrie oder eine Geometrie mit einer geraden Kante umfassen. Insbesondere kann diese Geometrie an die Bedingungen des jeweiligen Objektivs angepasst werden.

Das beispielhafte Mikroskop 10 umfasst insbesondere einen in das Objektiv integrierten Strahlteiler zur Einkopplung der Beleuchtung und mindestens eine in das Objektiv integrierte Brechkraft des Beleuchtungsstrahlengangs, ein fest in das Objektiv integriertes Kontrastierelement, eine in das Objektiv integrierte Schnittstelle 48 zum Einschieben verschiedener Kontrastierelemente oder eine in das Objektiv integrierte Lambda/4-Platte, wobei die Lambda/4-Platte drehbar gelagert ist.

Durch die bevorzugte Ausführungsform wird eine Beleuchtungsschnittstelle in einem Mikroskop realisiert. Insbesondere wird eine Beleuchtungsschnittstelle zwischen dem Mikroskopstativ und dem in der Objektebene liegenden Objekt bereitgestellt. Die Beleuchtungsschnittstelle entspricht dabei dem in das Objektiv integrierten Strahlteiler, der in das Objektiv integrierten Lambda/4-Platte bzw. dem in das Objektiv integrierten refraktiven Element. Durch die konstruktive Trennung von Beleuchtungsquelle und Objektiv wird das einfache und flexible Adaptieren von verschiedenen Objektiven mit Hilfe der definierten Beleuchtungsschnittstelle ermöglicht. Die Lichtquelle ist dabei in das Stativ integriert, was hinsichtlich der Wärmeabfuhr Vorteile bringt, da die thermisch sensible Beobachtungsoptik bzw. das Objektiv örtlich und damit thermisch deutlich getrennt von der Lichtquelle angeordnet ist. Die Kontrastiereinheit ist in das Objektiv integriert, die damit spezifisch an die Bedingungen im Objektiv ausgestaltet werden kann.

### Bezugszeichenliste

- 10: Mikroskop
- 11: Detektor
- 12: Objektebene
- 13, 15: Achse des Strahlengangs
- 21a, 21b, 23a, 23b: Strahlengang
- 14: Objektiv
- 16: Bildsensor bzw. Bildebene
- 17, 19: Arbeitsabstand
- 18: Mikroskopstativ
- 20,42: Mikroskopobjektiv
- 21: Mikroskopobjektivgehäuse
- 22: Lichtquelle
- 24: Strahlteiler
- 26: Lambda/4-Platte
- 28: refraktives Element
- 30: Leuchtfeldblende
- 32: Polarisator
- 34: Analysator
- 36: Kontrastierelement
- 38a, 38b: optische Elemente
- 40a bis 40d, 44a bis 44c: Objektivlinsen
- 46: Feldrand
- 48: Kontrastierelementschnittstelle
- F: Feldebene

## Patentansprüche

1. Mikroskopobjektiv (20) umfassend:
ein Mikroskopobjektivgehäuse (21),
mehrere in dem Mikroskopobjektivgehäuse (21) angeordnete Objektivlinsen (40a-40d); und
wenigstens einen in dem Objektivgehäuse integrierten Strahlteiler (24), der zum Einkoppeln einer koaxialen Auflichtbeleuchtung vorhanden ist,
wobei das Mikroskopobjektiv (20) ein abnehmbares Mikroskopobjektiv ist, das eingerichtet ist, an einem Mikroskopstativ (18) montierbar und abmontierbar zu sein,
**dadurch gekennzeichnet, dass** das Objektiv ferner ein in das Objektivgehäuse (21) integriertes refraktives Element (28) umfasst, wobei ein der Objektebene (12) zugewandter Teil des Mikroskopobjektivs (20) in dem Beobachtungsstrahlengang zwischen der Objektebene (12) und der Bildebene (16) und in dem Beleuchtungsstrahlengang zwischen einer Lichtquelle (22) und der Objektebene (12) angeordnet ist, wobei das integrierte refraktive Element (28) dem Strahlteiler (24) in Beleuchtungsrichtung vorgeordnet und in dem Beleuchtungsstrahlengang zwischen der Lichtquelle (22) und der Objektebene (12) in einem der Lichtquelle (22) zugewandten Teil des Mikroskopobjektivs (20) derart angeordnet ist, dass die Beleuchtungsaperatur der Objektivapertur des Mikroskopobjektivs (20) entspricht.

2. Mikroskopobjektiv (20) nach Anspruch 1, **dadurch gekennzeichnet, dass** das Objektiv ferner eine Lambda/4-Platte (26) umfasst, wobei die Platte (26) in dem Gehäuse derart integriert ist, dass die Platte (26) zwischen mehreren dem Strahlteiler (24) in Beleuchtungsrichtung nachgeordneten Objektivlinsen (40a-40d) angeordnet ist.

3. Mikroskopobjektiv (20) nach Anspruch 2, **dadurch gekennzeichnet, dass** die Linsenflächen derjenigen Objektivlinsen (40c, 40d), die der Lambda/4-Platte (26) in Beleuchtungsrichtung nachgeordnet sind, derart ausgebildet sind, dass an denselben reflektiertes Licht im Wesentlichen aus dem Beobachtungsstrahlengang herauslenkbar ist.

4. Mikroskop (10) zum Detektieren von Bildern eines in einer Objektebene (12) liegenden Objekts (14) umfassend:
ein Mikroskopstativ (18);
ein abnehmbares Mikroskopobjektiv (20) nach einem der Ansprüche 1 bis 3; und
eine in das Mikroskopstativ (18) integrierte Lichtquelle (22).

5. Mikroskop (10) nach Anspruch 4, **dadurch gekennzeichnet, dass** der in das Mikroskopobjektivgehäuse (21) integrierte Strahlteiler (24) in einem Beobachtungsstrahlengang zwischen der Objektebene (12) und einer Bildebene (16) des Mikroskops (10) und in einem Beleuchtungsstrahlengang zwischen der Lichtquelle (22) und der Objektebene (12) derart angeordnet ist, dass das von der Lichtquelle (22) erzeugte Licht auf das in der Objektebene (12) liegende Objekt (14) ablenkbar ist.

6. Mikroskop (10) nach Anspruch 4 oder 5, **dadurch gekennzeichnet, dass** der Beobachtungsstrahlengang und der Beleuchtungsstrahlengang zumindest teilweise koaxial sind.

7. Mikroskop (10) nach einem der Ansprüche 4 bis 6, **dadurch gekennzeichnet, dass** der Strahlteiler (24) derart ausgebildet ist, dass das von der Lichtquelle (22) erzeugte Licht in den Beobachtungsstrahlengang einkoppelbar ist.

8. Mikroskop (10) nach einem der Ansprüche 4 bis 7, **dadurch gekennzeichnet, dass** der Strahlteiler (24) relativ zur Lichtquelle (22) derart angeordnet ist, dass das von der Lichtquelle (22) erzeugte Licht seitlich in den Beobachtungsstrahlengang einkoppelbar ist und das seitlich in den Beobachtungsstrahlengang einkoppelbare Licht auf das in der Objektebene (12) liegende Objekt (14) ablenkbar ist.

9. Mikroskop (10) nach einem der Ansprüche 4 bis 8, **dadurch gekennzeichnet, dass** in dem Beleuchtungsstrahlengang zwischen der Lichtquelle (22) und der Objektebene (12) in einem dem Mikroskopobjektiv (20) zugewandten Teil des Mikroskopstativs (18) eine Leuchtfeldblende (30) und eine Aperturblende derart angeordnet sind, dass eine Köhlersche Bedingung für die Beleuchtung des Objekts (14) erfüllt ist.

10. Mikroskop (10) nach einem der Ansprüche 4 bis 8, **dadurch gekennzeichnet, dass** die Lichtquelle (22) in eine Feldebene und durch das Mikroskopobjektiv (20) in die Objektebene (12) abbildbar ist, so dass eine kritische Beleuchtung des Objekts (12) erzielbar ist.

11. Mikroskop (10) nach einem der Ansprüche 4 bis 10, **dadurch gekennzeichnet, dass** eine Lambda/4-Platte (26) zwischen mehreren dem Strahlteiler (24) in Beleuchtungsrichtung nachgeordneten Objektivlinsen (40a-40d) angeordnet ist, und dass die Linsenflächen derjenigen Objektivlinsen (40c, 40d), die der Lambda/4-Platte (26) in Beleuchtungsrichtung nachgeordnet sind, derart ausgebildet sind, dass an denselben reflektiertes Licht im Wesentlichen aus dem Beobachtungsstrahlengang herausgelenkt wird.

12. Mikroskop (10) nach einem der Ansprüche 4 bis 11, **dadurch gekennzeichnet, dass** im Mikroskopobjektiv (20) ein Kontrastierelement (36) angeordnet ist.

13. Mikroskop (10) nach einem der Ansprüche 4 bis 12, **gekennzeichnet durch** eine in das Mikroskopobjektiv (20) integrierte Schnittstelle (48) zum Einschieben verschiedener Kontrastierelemente.

14. Mikroskopsystem umfassend:
ein Mikroskop (10) nach einem der Ansprüche 4 bis 13 und
wenigstens ein strahlteilerfreies weiteres, abnehmbares Mikroskopobjektiv (42),
wobei der Arbeitsabstand und/oder die Brennweite bei Montage des strahlteilerfreien Objektivs (42) grösser als bei Montage des den Strahlteiler umfassenden Objektivs (20) ist.

## Claims

1. A microscope objective (20) comprising:
a microscope objective housing (21),
several objective lenses (40a-40d) arranged in the microscope objective housing; and
at least one beam splitter (24) integrated into the objective housing, that is present for coupling in a coaxial incident light illumination,
the microscope objective (20) being a removable microscope objective that is configured to be mountable on and demountable from a microscope stand (18),
**characterized in that** the objective further comprises a refractive element (28) integrated into the objective housing (21), a portion of the microscope objective (20) facing toward the object plane (12) being arranged in the observation beam path between the object plane (12) and the image plane (16), and in the illumination beam path between a light source (22) and the object plane (12), the integrated refractive element (28) being arranged upstream of the beam splitter (24) in the illumination direction and in the illumination beam path between the light source (22) and the object plane (12) in a portion of the microscope objective (20) facing toward the light source (22) such that the illumination aperture corresponds to the objective aperture of the microscope objective (20).

2. The microscope objective (20) according to claim 1, **characterized in that** the objective further comprises a lambda/4 plate (26), the plate (26) being integrated into the housing such that the plate (26) is arranged between several objective lenses (40a-40d) arranged downstream of the beam splitter (24) in the illumination direction.

3. The microscope objective (20) according to claim 2, **characterized in that** the lens surfaces of the objective lenses (40c, 40d) that are arranged downstream of the lambda/4 plate (26) in the illumination direction are configured such that light reflected at the lens surfaces is deflectable substantially out of the observation beam path.

4. The microscope (10) for detecting images of an object (14) located in an object plane (12), comprising:
a microscope stand (18);
a removable microscope objective (20) according to one of the claims 1 to 3; and
a light source (22) integrated into the microscope stand (18) .

5. The microscope (10) according to claim 4, **characterized in that** the beam splitter (24) integrated into the microscope objective housing (21) is arranged in an observation beam path between the object plane (12) and an image plane (16) of the microscope (10) and in an illumination beam path between the light source (22) and the object plane (12) such that the light generated by the light source (22) is deflectable onto the object (14) located in the object plane (12).

6. The microscope (10) according to claim 4 or 5, **characterized in that** the observation beam path and the illumination beam path are at least in part coaxial.

7. The microscope (10) according to one of the claims 4 to 6, **characterized in that** the beam splitter (24) is configured such that the light generated by the light source (22) is couplable into the observation beam path.

8. The microscope (10) according to one of the claims 4 to 7, **characterized in that** the beam splitter (24) is arranged relative to the light source (22) such that the light generated by the light source (22) is couplable laterally into the observation beam path and the light couplable laterally into the observation beam path is deflectable onto the object (14) located in the object plane (12).

9. The microscope (10) according to one of the claims 4 to 8, **characterized in that** a field diaphragm (30) and an aperture diaphragm are arranged in the illumination beam path between the light source (22) and the object plane (12) in a portion of the microscope stand (18) facing the microscope objective (20) such that a Kohler condition for illumination of the object (14) is satisfied.

10. The microscope (10) according to one of the claims 4 to 8, **characterized in that** the light source (22) is imageable into a field plane and through the microscope objective (20) into the object plane (12) so that critical illumination of the object (12) is achievable.

11. The microscope (10) according to one of the claims 4 to 10, **characterized in that** a lambda/4 plate (26) is arranged between several objective lenses (40a to 40d) arranged downstream of the beam splitter (24) in the illumination direction, and that the lens surfaces of those objective lenses (40c, 40d) that are downstream of the lambda/4 plate (26) in the illumination direction are configured such that light reflected at the lens surfaces is deflected substantially out of the observation beam path.

12. The microscope (10) according to one of the claims 4 to 11, **characterized in that** a contrasting element (36) is arranged in the microscope objective (20).

13. The microscope (10) according to one of the claims 4 to 12, **characterized by** an interface (48) integrated into the microscope objective (20) for inserting different contrasting elements.

14. The microscope system, comprising:
a microscope (10) according to one of the claims 4 to 13, and
at least one beam splitter-free further removable microscope objective (42),
wherein the working distance and/or the focal length is longer when the beam splitter-free objective (42) is mounted than when the objective (20) comprising the beam splitter is mounted.

## Revendications

1. Objectif de microscope (20) comprenant :
un boîtier d'objectif de microscope (21),
une pluralité de lentilles d'objectif (40a-40d) disposées dans le boîtier d'objectif de microscope (21) ; et
au moins un diviseur de faisceau (24) qui est intégré dans le boîtier d'objectif et qui est présent afin d'injecter par couplage une lumière d'éclairage incidente coaxiale,
l'objectif de microscope (20) étant un objectif de microscope amovible qui est conçu pour pouvoir être monté et démonté sur un support de microscope (18),
**caractérisé en ce que** l'objectif comprend en outre un élément réfractif (28) intégré dans le boîtier d'objectif (21), une partie de l'objectif de microscope (20) qui est dirigée vers le plan objet (12) étant disposée dans le trajet de faisceau d'observation entre le plan objet (12) et le plan image (16) et dans le trajet de faisceau d'éclairage entre une source de lumière (22) et le plan objet (12), l'élément de réfraction intégré (28) étant disposé en amont du diviseur de faisceau (24) dans la direction d'éclairage et étant disposé dans le trajet de faisceau d'éclairage entre la source de lumière (22) et le plan objet (12) dans une partie de l'objectif de microscope (20) qui est dirigée vers la source de lumière (22) de manière à ce que l'ouverture d'éclairage corresponde à l'ouverture d'objectif de l'objectif de microscope (20) .

2. Objectif de microscope (20) selon la revendication 1, **caractérisé en ce que** l'objectif comprend en outre une lame lambda/4 (26), la lame (26) étant intégrée dans le boîtier de telle sorte que la lame (26) soit disposée entre une pluralité de lentilles d'objectif (40a-40d) disposées en aval du diviseur de faisceau (24) dans la direction d'éclairage.

3. Objectif de microscope (20) selon la revendication 2, **caractérisé en ce que** les surfaces des lentilles d'objectif (40c, 40d) qui sont disposées en aval de la lame lambda/4 (26) dans la direction d'éclairage sont conçues de telle manière que la lumière réfléchie par celles-ci puisse être déviée sensiblement hors du trajet de faisceau d'observation.

4. Microscope (10) destiné à détecter des images d'un objet (14) se trouvant dans un plan objet (12), ledit microscope comprenant :
un support de microscope (18) ;
un objectif de microscope amovible (20) selon l'une des revendications 1 à 3 ; et
une source de lumière (22) intégrée dans le support de microscope (18).

5. Microscope (10) selon la revendication 4, **caractérisé en ce qu'**un diviseur de faisceau (24), intégré dans le boîtier d'objectif de microscope (21), est disposé dans un trajet de faisceau d'observation entre le plan objet (12) et un plan image (16) du microscope (10) et dans un trajet de faisceau d'éclairage entre la source de lumière (22) et le plan objet (12) de telle manière que la lumière générée par la source de lumière (22) puisse être déviée sur l'objet (14) se trouvant dans le plan objet (12).

6. Microscope (10) selon la revendication 4 ou 5, **caractérisé en ce que** le trajet de faisceau d'observation et le trajet de faisceau d'éclairage sont au moins partiellement coaxiaux.

7. Microscope (10) selon l'une des revendications 4 à 6, **caractérisé en ce que** le diviseur de faisceau (24) est conçu de telle sorte que la lumière générée par la source de lumière (22) puisse être injectée par couplage dans le trajet de faisceau d'observation.

8. Microscope (10) selon l'une des revendications 4 à 7, **caractérisé en ce que** le diviseur de faisceau (24) est disposé par rapport à la source de lumière (22) de telle sorte que la lumière générée par la source de lumière (22) puisse être injectée par couplage latéralement dans le trajet de faisceau d'observation et que la lumière qui peut être injectée par couplage latéralement dans le trajet de faisceau d'observation puisse être déviée sur l'objet (14) se trouvant dans le plan objet (12).

9. Microscope (10) selon l'une des revendications 4 à 8, **caractérisé en ce qu'**un diaphragme de champ lumineux (30) et un diaphragme d'ouverture sont disposés dans le trajet de faisceau d'éclairage entre la source de lumière (22) et le plan objet (12) dans une partie du support de microscope (18) qui est dirigée vers l'objectif de microscope (20) de telle sorte qu'une condition de Koehler pour éclairer l'objet (14) soit remplie.

10. Microscope (10) selon l'une des revendications 4 à 8, **caractérisé en ce que** la source de lumière (22) peut être reproduite dans un plan de champ et, par le biais de l'objectif de microscope (20), dans le plan objet (12) de sorte qu'un éclairage critique de l'objet (12) soit réalisable.

11. Microscope (10) selon l'une des revendications 4 à 10, **caractérisé en ce qu'**une lame lambda/4 (26) est disposée entre plusieurs lentilles d'objectif (40a-40d) disposées en aval du diviseur de faisceau (24) dans la direction de éclairage, et **en ce que** les surfaces des lentilles d'objectif (40c, 40d) qui sont disposées en aval de la lame lambda/4 (26) dans la direction d'éclairage sont conçues de telle manière que la lumière réfléchie sur celles-ci est sensiblement déviée hors du trajet de faisceau d'observation.

12. Microscope (10) selon l'une des revendications 4 à 11, **caractérisé en ce qu'**un élément de contraste (36) est disposé dans l'objectif de microscope (20).

13. Microscope (10) selon l'une des revendications 4 à 12, **caractérisé par** une interface (48) intégrée dans l'objectif de microscope (20) et destinée à insérer différents éléments de contraste.

14. Système de microscope comprenant :
un microscope (10) selon l'une des revendications 4 à 13 et
au moins un autre objectif de microscope amovible (42) sans diviseur de faisceau,
la distance de travail et/ou la distance focale lorsque l'objectif sans diviseur de faisceau (42) est monté étant plus grandes que lorsque l'objectif (20) comprenant le diviseur de faisceau est monté.
